# EUROPEAN PATENT SPECIFICATION

(11) **EP 2 264 259 B1**
(45) Date of publication and mention of the grant of the patent: **29.05.2013**
(21) Application number: 09165818.7
(22) Date of filing: 17.07.2009
(51) Int. Cl.: B32B 37/24, B32B 33/00, B27N 3/00, E04F 15/10, E04F 15/02, B44C 5/04

(54) **Panel, use of a panel, method for manufacturing a panel and a prepreg**
Platte, Verwendung der Platte, Herstellungsverfahren für die Platte und Prepreg
Panneau, utilisation d'un panneau, procédé de fabrication d'un panneau et pré-programmation

(30) Priority: 17.06.2009 EP 09007916
(43) Date of publication of application: 22.12.2010
(60) Divisional application: 13156132.6
(73) Proprietor: Flooring Technologies Ltd., Pieta PTA 9044 (MT)
(72) Inventor:
(74) Representative: Morawski, Birgit

(56) References cited:
- WO-A1-00/44576
- WO-A1-2004/050359
- WO-A1-2007/042258
- WO-A2-2005/066431
- WO-A2-2009/065769
- DE-A1-102004 050 278
- US-A- 3 308 013

## Description

The disclosure generally relates to the field of fiber-based panels with wear resistant surfaces. Such panels can be used e.g. as building or floor panels.

WO 2009 065 769 A2 discloses a panel of this kind.

One issue with panels of this kind is the sensitivity to UV radiation. If a panel comprises a surface with e.g. wood fibers, the surface will change its color over time. In many cases the surface will become yellowish.

Therefore it is important to have panels with an improved light fastness.

One embodiment is a panel, comprising a surface layer on a substrate. The surface layer comprises a mixture of
a) cellulose fibers, wherein the cellulose fibers are at least partially bleached,
b) at least one binder and
c) wear resistant particles.

As will be described below, the substrate can be a homogenous substrate, such a board, or it can comprise more than one layer, like a core and / or balancing layer. The surface layer is on the side of the substrate which is in use turned towards the light and / or environmental influences.

Such panels can e.g. used as flooring panels, wall panels, ceiling panels, facade panels, furniture panels, automotive parts, wet room panels or kitchen cutting boards.

One embodiment for especially for manufacturing panels described above comprises the following steps:
a) bringing at least partially bleached cellulose fibers, at least one binder and wear resistant particles onto a substrate,
b) applying pressure and temperature to cure the mixture of the substances of step a) on the substrate.

Embodiments for panels like these are described in connection with the drawing. In the drawings
- Fig. 1: shows part of a perspective view of a cross-section of a panel according to a first embodiment;
- Fig. 2: shows part of a perspective view of a cross-section of a panel according to a further embodiment
- Fig. 3: shows two panels connected using a locking system;

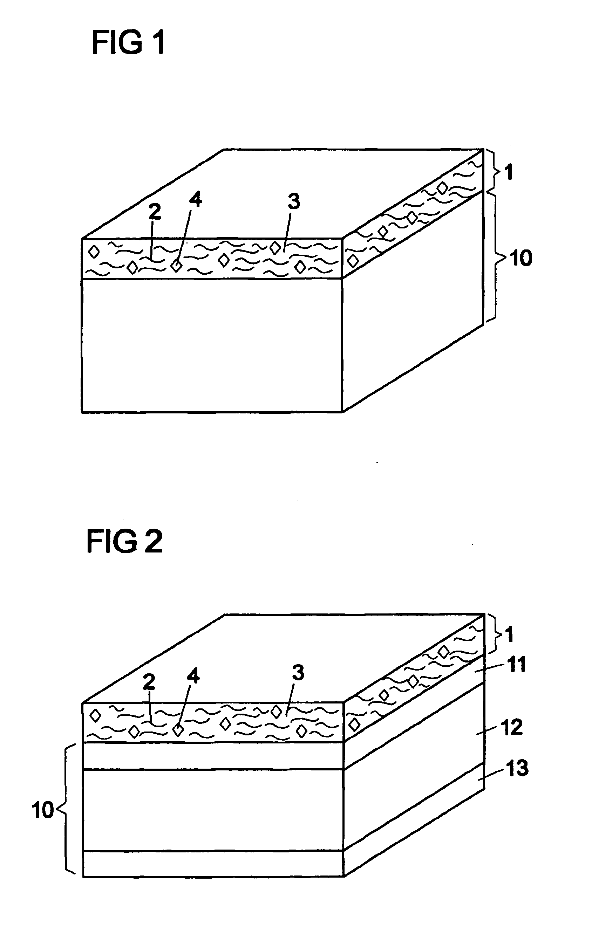

In Fig. 1 a perspective view of a cross-section of a panel which can e.g. be used as a flooring panel is shown. Flooring panels are subjected to light, e.g. through windows, so that the light fastness of flooring panels is one important factor.

The panel comprises two sections: A substrate 10 on which a surface layer 1 is positioned. The surface layer 1 is the one part which is especially important in respect to light fastness since it is the side of the panel which is exposed to light, when in use. As will be seen below, the surface layer 1 can comprise sublayers and does not have to be homogenous.

The substrate 10 can be one homogenous part, e.g. consisting of a board. In Fig. 2 a more complex structure of the substrate 10 is shown.

Within the surface layer 1 at least three components are present which in combination bring the desired functionality of the surface layer 1. The surface layer comprises at least partially bleached cellulose fibers 2 which can be derived from e.g. wood, cotton or hemp. The cellulose fibers 2 act as reinforcement material. The length of typical cellulose fibers can be between 1 and 5 mm.

The cellulose fibers 2 have the feature of being light fast, especially light faster than wood fibers. Therefore a surface layer 1 comprising cellulose does not become discolored (e.g. yellow) under irradiation with UV light, such as it is normally present in sunlight.

The cellulose fibers 2 are at least partially bleached. The bleaching, e.g. which NaOH, reduces the concentration of components (e.g. lignin, hemicelluloses) which can give especially rise to discoloring.

One possible embodiment comprises at least partially bleached cellulose fibers 2 having a white grade measured according to Berger of more than 80.

But the panel described herein is not only bright but also resistant against discoloring. One embodiment is panel having a light fastness according to grey wool scale EN 20 105 of the surface layer 1 with a level higher than 2.

Furthermore the surface layer 1 comprises binder 3 and wear resistant particles 4. The binder 3 holds the different components of the surface layer 1 together.

Possible binders 3 are e.g. melamine resins, acrylic resins and / or polyurethane resins, i.e. mixtures of these resins are also suitable as binders 3. These binders 3 provide sufficient resilience against environmental impacts.

Suitable wear resistant particles 4 are aluminum oxides, silicon carbides, silicon oxides and / or micro glass bubbles. These particles are resilient and sufficiently color neutral.

If color is to be applied to the panel, this can be achieved by including suitable pigments into the surface layer 1.

The embodiments described so far comprised one substrate 10 without differentiated layers.

In Fig. 2 a substrate 10 with three layers 11, 12, 13 is shown. On the front side, i.e. the side exposed to light or other environmental effects, the surface layer 1 is positioned. The surface layer 1 can have the properties according to at least of one of the embodiments described above.

One layer in the substrate 10 is core 11 which is positioned underneath the surface layer 1. One purpose of the core 11 is to provide some resilience in case the surface layer 1 is structured e.g. by pressing with a tool (not shown) into the surface layer 1. The core 11 can comprise wood fibers, cellulose fibers, hemp fibers, cotton fibers and / or plastic fibers. Since the purpose of the core 11 is primarily not the stability of the overall panel, but the resilience, less costly components, like wood fibers can be used here in higher concentrations. Other possible components of the core 11 can be a binder (such as the resins mentioned above), bleached cellulose, unbleached cellulose, bleached ground wood, unbleached ground wood and / or pigments.

Structuring the surface layer 1 and the core 11 can result in a surfaces e.g. with a stone-like structure or a tile-like structure. Together with suitable pigments the panel can have the appearance of stone or tiles. Another possibility structure the surface layer 1 is an analogue or digital printing process, applying e.g. a decorative print.

In Fig. 2 a board 12 is positioned underneath the core 11. The board 12 primary purpose is to give stability to the panel. Suitable materials for boards can be e.g. particle boards, HDF boards, gypsum boards, WPC (wood plastic composite) or OSB boards. Naturally it is possible to combine more than one kind of board to obtain a multilayered board 12.

As shown in Fig. 2 it is possible to position a balancing paper 13 underneath the board 12.

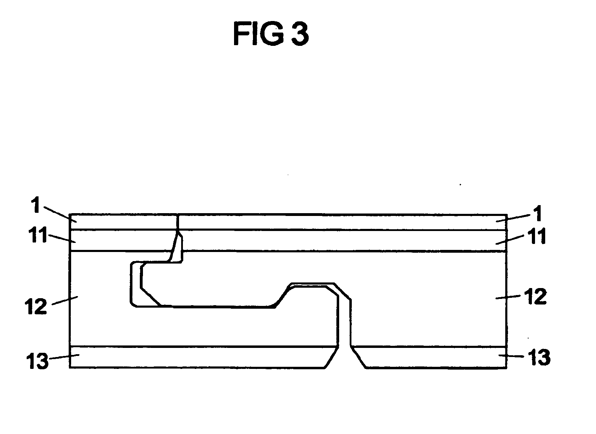

In Fig. 3 two panels with a surface layer 1 and a substrate 10 are shown which are connected through a locking system. The person skilled in the art will recognize that locking systems using other shapes are also possible.

The above described flooring panel is just one embodiment of the panels described herein. Other uses of such panels are wall panels, ceiling panels, facade panels, furniture panels, automotive parts, wet room panels or kitchen cutting boards.

The thickness of the surface layer 1 can vary between 0,05 and 0,3 mm. The thickness of the core 11 can vary between 0.05 and 1 mm.

All these panels would benefit from the surface layer 1 using cellulose fibers, at least one binder and wear-resistant particles.

In the following an embodiment of a method for manufacturing panels is described.

The components of the surface layer 1, i.e. the at least partially bleached cellulose fibers 2, the at least one binder 3 and the wear resistant particles 4, are mixed until they form an essentially homogenous mass. This mixture is then applied to the surface of the substrate 10. After this step pressure and temperature are applied to the surface to cure the mixture and to fasten the surface layer 1 to the substrate 10.

Suitable process conditions are pressures between 3 and 8 MPa and temperatures in the range between 150 and 200 °C.

It is preferred that the surface of the substrate 10 is wetted by using a wetting station before applying the mixture to it. This is one means to produce firmer panels and prevent dusting.

The different components of the surface layer 1 can be scattered onto the substrate 10 by the means of the scatter station.In one embodiment of the method, melamine resin powder is scattered onto the surface of the substrate with cellulose fibers 2 and aluminum oxides. The scattering station can comprise different tanks so that the components to be scattered do not have to be stored in one tank. Further optionally pigments can be scattered onto substrate 10 together with the cellulose fibers and the resin.

In a subsequent heating station some sort of heating is applied to the layer. The heating station can e.g. comprise an infrared source and / or a microwave source.

In a prepress station pressure and elevated temperatures are applied to the surface layer. This leads to a prepreg with an increased density.

In a pressing station further pressure and elevated temperature is applied to fuse the surface layer and the substrate together. This leads to a curing of the components. Typical operating conditions are pressures in the range 3 to 8 MPa and 150 to 250 °C.

The stages described here are only described schematically. Each of the stages might comprise more than one apparatus.

## Claims

1. Panel comprising a surface layer (1) on a substrate (10),
**characterized in that**
the surface layer (1) comprises
a) cellulose fibers (2), wherein the cellulose fibers (2) are at least partially bleached,
b) at least one binder (3) and
c) wear resistant particles (4).

2. Panel according to claim 1, wherein the cellulose fibers (2), the at least one binder (3) and the wear resistant particles (4) are present in one mixture on the substrate (10).

3. Panel according to at least one of the preceding claims, wherein the at least partially bleached cellulose fibres (2) have a white grade measured according to Berger of more than 80.

4. Panel according to at least one of the preceding claims, wherein the light fastness according to grey wool scale EN 20 105 of the surface layer (1) is higher than 2.

5. Panel according to at least one of the preceding claims, wherein the surface layer (1) comprises pigments.

6. Panel according to at least one of the preceding claims, wherein the binder (3) comprises melamine resin, acrylate resin and / or polyurethane resin.

7. Panel according to at least one of the preceding claims, wherein the wear resistant particles (4) are at least one of the following: aluminum oxides, silicon carbides, silicon oxide, micro glass bubbles.

8. Panel according to at least one of the preceding claims, wherein the substrate (10) comprises a core (11) with at least one of the following: wood fibers, cellulose fibers, hemp fibers, cotton fibers, plastic fibers.

9. Panel according to at least one of the preceding claims, wherein the surface layer (1) and / or the core (11) comprises a structure, especially a tile-like structure or a stone-like structure.

10. Panel according to at least one of the preceding claims, wherein the board (12) is a particle board or a HDF board or a gypsum board or an OSB board.

11. Method for manufacturing especially a panel according to claim 1 to 10 comprising
a) bringing at least partially bleached cellulose fibers (2), at least one binder (3) and wear resistant particles (4) onto the substrate (10),
b) applying pressure and temperature to cure the mixture of the substances of step a) on the substrate (10).

12. Method according to claim 11, wherein the pressure in step b) is between 3 and 8 MPa and the temperature is between 150 °C and 250 °C.

13. Method according to claim 11 or 12, wherein the wear resistant particles (4) are scattered into the surface layer (1) together with other components of the surface layer (1), especially cellulose fibers (2) and / or at least one binder (3).

## Patentansprüche

1. Paneel, umfassend eine Oberflächenschicht (1) auf einem Substrat (10),
**dadurch gekennzeichnet, dass**
die Oberflächenschicht (1)
a) Cellulosefasern (2), die wenigstens teilweise gebleicht sind,
b) wenigstens ein Bindemittel (3) und
c) verschleißfeste Partikel (4)
umfasst.

2. Paneel nach Anspruch 1, wobei die Cellulosefasern (2), das wenigstens eine Bindemittel (3) und die verschleißfesten Partikel (4) in einem Gemisch auf dem Substrat (10) vorliegen.

3. Paneel nach wenigstens einem der vorhergehenden Ansprüche, wobei die wenigstens teilweise gebleichten Cellulosefasern (2) einen Weißgrad, gemessen gemäß Berger, von mehr als 80 aufweisen.

4. Paneel nach wenigstens einem der vorhergehenden Ansprüche, wobei die Lichtechtheit der gemäß der Wolle-Grauskala EN 20 105 der Oberflächenschicht (1) höher als 2 ist.

5. Paneel nach wenigstens einem der vorhergehenden Ansprüche, wobei die Oberflächenschicht (1) Pigmente umfasst.

6. Paneel nach wenigstens einem der vorhergehenden Ansprüche, wobei das Bindemittel (3) Melaminharz, Acrylatharz und/oder Polyurethanharz umfasst.

7. Paneel nach wenigstens einem der vorhergehenden Ansprüche, wobei die verschleißfesten Partikel (4) wenigstens eines von Folgendem sind: Aluminiumoxide, Siliciumcarbide, Siliciumoxid, Mikroglasbläschen.

8. Paneel nach wenigstens einem der vorhergehenden Ansprüche, wobei das Substrat (10) einen Kern (11) mit wenigstens einem von Folgendem umfasst:
Holzfasern, Cellulosefasern, Hanffasern, Baumwollfasern, Kunststofffasern.

9. Paneel nach wenigstens einem der vorhergehenden Ansprüche, wobei die Oberflächenschicht (1) und/oder der Kern (11) eine Struktur, insbesondere eine fliesenartige Struktur oder steinartige Struktur, umfasst.

10. Paneel nach wenigstens einem der vorhergehenden Ansprüche, wobei es sich bei der Platte (12) um eine Spanplatte oder eine HDF-Platte oder eine Gipsplatte oder eine OSB-Platte handelt.

11. Verfahren zum Herstellen insbesondere eines Paneels nach Anspruch 1 bis 10, umfassend:
a) Aufbringen von wenigstens teilweise gebleichten Cellulosefasern (2), wenigstens einem Bindemittel (3) und verschleißfesten Partikeln (4) auf das Substrat (10),
b) Anwenden von Druck und Temperatur zum Härten des Gemischs von den Substanzen aus Schritt a) auf dem Substrat (10).

12. Verfahren nach Anspruch 11, wobei der Druck bei Schritt b) zwischen 3 und 8 MPa liegt und die Temperatur zwischen 150 °C und 250 °C liegt.

13. Verfahren nach Anspruch 11 oder 12, wobei die verschleißfesten Partikel (4) zusammen mit anderen Komponenten der Oberflächenschicht (1), insbesondere Cellulosefasern (2) und/oder wenigstens einem Bindemittel (3), in die Oberflächenschicht (1) ausgestreut werden.

## Revendications

1. Panneau comprenant une couche de surface (1) sur un substrat (10),
**caractérisé en ce que**
la couche de surface (1) comprend
a) des fibres de cellulose (2), les fibres de cellulose (2) étant au moins partiellement blanchies,
b) au moins un liant (3), et
c) des particules résistantes à l'usure (4).

2. Panneau selon la revendication 1, dans lequel les fibres de cellulose (2), l'au moins un liant (3) et les particules résistantes à l'usure (4) sont présents dans un mélange sur le substrat (10).

3. Panneau selon au moins une des revendications précédentes, dans lequel les fibres de cellulose (2) au moins partiellement blanchies ont un degré de blancheur mesuré selon Berger de plus de 80.

4. Panneau selon au moins une des revendications précédentes, dans lequel la solidité à la lumière de la selon l'échelle de laine grise EN 20 105 de la couche de surface (1) est supérieure à 2.

5. Panneau selon au moins une des revendications précédentes, dans lequel la couche de surface (1) comprend des pigments.

6. Panneau selon au moins une des revendications précédentes, dans lequel le liant (3) comprend de la résine de mélamine, une résine d'acrylate et/ou de la résine de polyuréthane.

7. Panneau selon au moins une des revendications précédentes, dans lequel les particules résistantes à l'usure (4) sont l'une au moins des suivantes : oxydes d'aluminium, carbures de silicium, oxyde de silicium, microbulles de verre.

8. Panneau selon au moins une des revendications précédentes, dans lequel le substrat (10) comprend un coeur (11) avec l'une au moins des suivantes : fibres de bois, fibres de cellulose, fibres de chanvre, fibres de coton, fibres plastiques.

9. Panneau selon au moins une des revendications précédentes, dans lequel la couche de surface (1) et/ou le coeur (11) comprennent une structure, en particulier une structure en forme de carreaux ou une structure en forme de pierres.

10. Panneau selon au moins une des revendications précédentes, dans lequel la plaque (12) est un panneau de particules ou un panneau HDF ou un panneau de gypse ou un panneau OSB.

11. Procédé pour fabriquer spécialement un panneau selon les revendications 1 à 10, comprenant
a) le dépôt de fibres de cellulose (2) au moins partiellement blanchies, d'au moins un liant (3) et de particules résistantes à l'usure (4) sur le substrat (10),
b) l'application d'une pression et d'une température pour durcir le mélange des substances de l'étape a) sur le substrat (10).

12. Procédé selon la revendication 11, dans lequel la pression à l'étape b) se situe entre 3 et 8 MPa et la température se situe entre 150 °C et 250 °C.

13. Procédé selon la revendication 11 ou 12, dans lequel les particules résistantes à l'usure (4) sont dispersées dans la couche de surface (1) conjointement avec d'autres composants de la couche de surface (1), en particulier des fibres de cellulose (2) et/ou au moins un liant (3).
